# EUROPÄISCHE PATENTSCHRIFT

(11) **EP 1 375 010 B1**
(45) Veröffentlichungstag und Bekanntmachung des Hinweises auf die Patenterteilung: **09.02.2005**
(21) Anmeldenummer: 03014135.2
(22) Anmeldetag: 24.06.2003
(51) Int. Cl.: B05B 11/00, B29C 45/14, B29C 45/00, B29C 45/26

(54) **Dosierpumpe, Verfahren zu ihrer Herstellung und Vorrichtung zur Durchführung des Verfahrens**
Dosing pump, process of manufacturing the dosing pump and apparatus for performing the process
Pompe à dosage, procédé de fabrication de cette pompe et appareil pour executer ce procédé

(30) Priorität: 25.06.2002 DE 10229618
(43) Veröffentlichungstag der Anmeldung: 02.01.2004
(73) Patentinhaber: Ing. Erich Pfeiffer GmbH, 78315 Radolfzell (DE)
(72) Erfinder: Fuchs, Karl-Heinz, 78315 Radolfzell (DE)
(74) Vertreter: Patentanwälte Ruff, Wilhelm, Beier, Dauster & Partner

(56) Entgegenhaltungen:
- EP-A- 0 342 651
- EP-A- 0 791 397
- WO-A-93/13927
- WO-A-94/20221
- WO-A-96/37308
- US-A- 6 032 834
- US-B1- 6 234 412
- US-B1- 6 308 867

## Beschreibung

Die Erfindung betrifft eine Dosierpumpe mit einer Balgfeder aus flexiblem, entlang einer Pumpachse axial nachgiebigen Material, deren Hohlraum als Pumpkamer gestaltet ist.

Eine derartige Dosierpumpe ist aus der DE 196 27 228 A1 bekannt. Die bekannte Dosierpumpe weist eine Balgfeder auf, die als Rückstellfeder für ein entsprechendes Pumpbetätigungsglied dient. Darüber hinaus ist die Balgfeder als Pumpkammer gestaltet. Auf ihrer zu einem Medienspeicher hin gewandten Seite ist der Balgfeder ein Einlassventil zugeordnet. Auf der gegenüberliegenden Austrittsseite der Balgfeder ist ein Auslassventil vorgesehen, das insbesondere in einem Dosierkopf positioniert ist. Die Balgfeder ist mit einem wendelförmig gestalteten Balgmantel versehen.

Die WO 96/37308 A1 offenbart eine Dosierpumpe, bei der ein Auslaßventil als Schlauchventil gestaltet ist.

Die EP 0791397 A1 betrifft eine Mediendosiervorrichtung, bei der mehrere Bauteile aus einem thermoplastischen Material hergestellt sind. Eine Rückstellfeder für einen Pumpenkolben ist als Wendelfeder aus Kunststoff gestaltet und steht im wesentlichen unter permanenter, federnder Vorspannung.

Darüber hinaus ist es allgemein bekannt, eine Dosierpumpe weitgehend aus Pumpenteilen aufzubauen, die im Spritzgussverfahren hergestellt sind. Zur Herstellung der Pumpenteile sind mehrere Spritzgussformen vorgesehen, in denen die Pumpenteile gespritzt werden. Nach dem Auswerfen der fertigen Spritzgussteile werden diese Montagevorrichtungen zugeführt und mittels dieser Montagevorrichtungen zu der Dosierpumpe montiert. Falls die Dosierpumpen in hohen Stückzahlen benötigt werden, erfolgt die Montage vollautomatisch. Dabei werden jeweils gleiche Spritzgussteile in separaten Behältnissen gesammelt. Anschließend werden die unterschiedlichen Spritzgussteile jeweils separiert voneinander den Greifer- und Montagevorrichtungen zugeführt. Die verschiedenen Spritzgussteile werden miteinander in verschiedenen Montageschritten zu der fertigen Dosierpumpe zusammengesetzt.

Aufgabe der Erfindung ist es, eine Dosierpumpe, der Eingangs genannten Art zu schaffen, die eine kostengünstige Herstellbarkeit und einen einfachen Aufbau ermöglicht.

Diese Aufgabe wird dadurch gelöst, dass die Balgfeder an einem Auslassbereich zu einem Dosierkopf hin als Schlauchventilabschnitt gestaltet ist, der mit einem korrespondierenden Ventilsitzabschnitt eines Dosierkopfes der Dosierpumpe zusammenwirkt. Der Schlauchventilabschnitt dient als Austrittsventil der Pumpkammer innerhalb der Balgfeder. Durch die einstückige Integration des Austrittsventils in die Balgfeder wird eine weitere Reduzierung von benötigten Pumpenteilen erreicht. Die Dosierpumpe kommt insbesondere mit einem als Kunststoffspritzgussteil gestalteten Gehäuseteil, der Balgfeder sowie einem Dosierkopf aus. Lediglich für die Verbindung zu einem Medienspeicher, auf den die Dosierpumpe aufsetzbar ist, kann der Balgfeder noch ein Einlassventil zugeordnet werden, das in einfacher Weise als Teller- oder Scheibenventil, vorzugsweise als gestanztes Kunststoffplattenteil, gestaltet sein kann. Die Dosierpumpe ist für unterschiedliche Medien einsetzbar, insbesondere für Flüssigkeiten, Gele oder Schäume. Besonders bevorzugt ist die Dosierpumpe einsetzbar für pharmazeutische oder kosmetische Produkte. Die erfindungsgemäße Dosierpumpe ist kostengünstig in großen Stückzahlen herstellbar, da sie lediglich wenige Pumpenbauteile aufweist. Vorteilhaft ist es, wenn im Bereich des Ventilsitzabschnittes des Dosierkopfes wenigstens eine Entlüftungsprofilierung vorgesehen ist, die bei einer Stauchung des Schlauchventils eine Entlüftung der Pumpkammer, d.h. ein Öffnen des Schlauchventilabschnittes, ermöglicht, auch wenn der umlaufende Dichtrand des Schlauchventilabschnittes von dem Ventilsitzabschnitt nicht abhebt. Der Schlauchventilabschnitt ist als manschettenförmiger Fortsatz der Balgfeder in ihrem Auslassbereich gestaltet. Als zugehöriger Ventilsitzabschnitt des Dosierkopfes ist vorzugsweise ein einstückig am Dosierkopf angeformter Konusabschnitt vorgesehen.

In Ausgestaltung der Erfindung ist der Schlauchventilabschnitt tellerfederartig mit einer ringförmigen Einschnürung versehen. Dadurch ist gewährleistet, dass das Schlauchventil beim Öffnen eine definierte, über seinen gesamten Umfang gleichmäßige, axiale Stauchung erfährt, wodurch eine besonders gleichmäßige und zuverlässige Mediumsausbringung erfolgt. Zudem wird ein gleichmäßiges und gleichzeitiges Abheben von dem dem Dosierkopf zugeordneten Ventilsitz und damit ein gleichmäßiges Öffnen des Austrittsventils erreicht.

In weiterer Ausgestaltung der Erfindung weist der Dosierkopf einen den Auslassbereich der Balgfeder außen axial übergreifenden Führungsstutzen auf, der axial beweglich auf dem Auslassbereich der Balgfeder aufsitzt. Dadurch nimmt der Führungsstutzen des Dosierkopfes den Schlauchventilabschnitt der Balgfeder auf. Die Axialbeweglichkeit des Dosierkopfes relativ zur Balgfeder kann gering bemessen sein und dient vor allem dazu, den Düsenkopf zur Entlüftung der Balgfeder, d.h. zur kurzzeitigen Öffnung des Austrittsventils, einen geringen Betrag axial in Richtung zur Pumpkammer zu drücken. Dies ermöglicht die Durchführung eines Primings, d.h. einer Entlüftung der Pumpkammer vor einer Erstinbetriebnahme der Dosierpumpe.

In weiterer Ausgestaltung der Erfindung ist die Balgfeder mit einem Einlassbereich in dem Pumpgehäuse kraftschlüssig gehalten. Der Einlassbereich ist der Bereich der Balgfeder, der dem entsprechenden Medienspeicher zugewandt ist. Im Einlassbereich ist vorzugsweise ein Einlassventil, insbesondere in Form eines Plattenventils, vorgesehen. Der Einlassbereich der Balgfeder oder ein korrespondierender Bereich des Pumpengehäuses sind hierzu vorzugsweise mit einem korrespondierenden Ventilsitz versehen, auf dem das Plattenventil aufliegt. Als kraftschlüssige Sicherung der Balgfeder ist insbesondere eine Klemmung der Balgfeder in ihrem Einlassbereich vorgesehen. Die Klemmung der Balgfeder verhindert ein Mitdrehen des Einlassbereiches der Balgfeder bei einer Kompression oder einem entsprechenden Rückstellvorgang der Balgfeder. Diese Ausgestaltung ist somit insbesondere vorteilhaft bei wendelförmig gestaltetem Balgmantel, bei dem auch Torsionsbelastungen auf die Pumpenbauteite ausgeübt werden.

Weitere Vorteile und Merkmale der Erfindung ergeben sich aus den Ansprüchen. Nachfolgend ist ein Ausführungsbeispiel der Erfindung beschrieben und anhand der Zeichnungen dargestellt.
- Fig. 1: zeigt in einer Schnittdarstellung eine Ausführungsform einer erfindungsgemäßen Dosierpumpe mit einem als Sprühkopf gestalteten Dosierkopf,
- Fig. 2: in einer Ansicht von unten einen zur Ausbringung von Gel oder Schaum gestalteten Dosierkopf für die Dosierpumpe nach Fig. 1,
- Fig. 3: einen Querschnitt durch den Dosierkopf nach Fig. 2,
- Fig. 4: schematisch in einer Schnittdarstellung ein Gehäuse und ein scheibenförmiges Einlassventil für die Dosierpumpe nach den Fig. 1 bis 3,
- Fig. 5: ebenfalls in schematischer Schnittdarstellung die beiden Pumpenbauteile gemäß Fig. 4, in die als weiteres Pumpenbauteil eine Balgfeder eingesetzt ist und
- Fig. 6: ebenfalls in schematischer Schnittdarstellung die Pumpenbauteile nach Fig. 5 für die Dosierpumpe nach den Fig. 1 bis 3, wobei ergänzend auf die Balgfeder und auf das Gehäuse noch der Dosierkopf gemäß den Fig. 2 und 3 aufgesetzt ist.

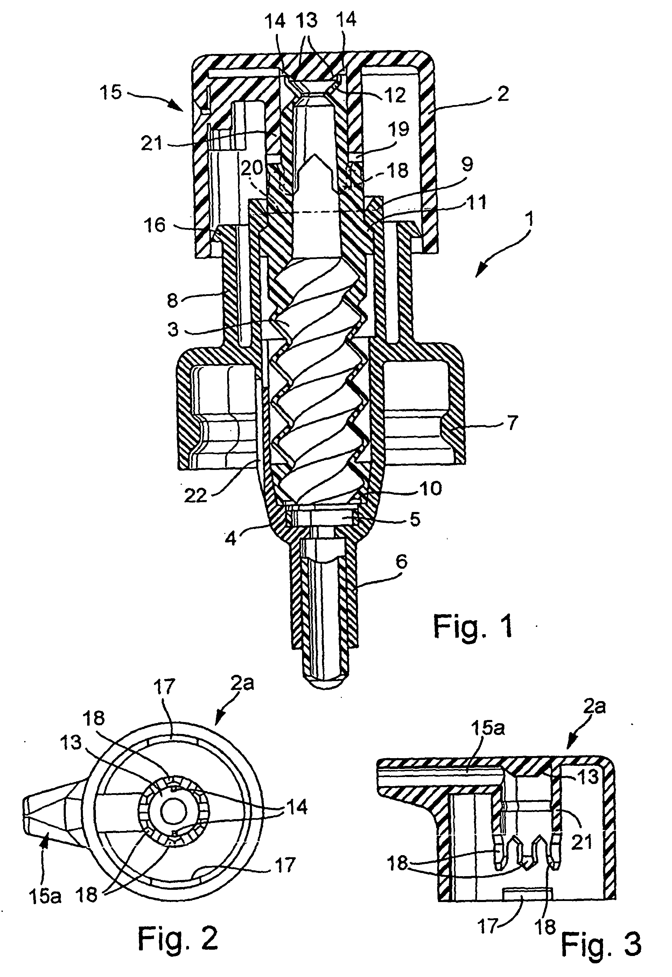

Eine Dosierpumpe nach den Fig. 1 bis 6 ist ausschließlich aus Pumpenbauteilen in Form von Kunststoffspritzgussteilen aufgebaut. Die Dosierpumpe 1 setzt sich insgesamt aus vier Kunststoffspritzgussteilen zusammen. Ein erstes Kunststoffspritzgussteil ist ein Gehäuse 4, das mit einem angeformten Verschlusskappenabschnitt 7 zum dichten Aufsetzen der Dosierpumpe 1 auf einen nicht näher dargestellten Medienspeicher in Form eines Behältnisses versehen ist. Eine Pumpkammer der Dosierpumpe 1 wird durch eine nachfolgend näher beschriebene Balgfeder 3 gebildet, die ebenfalls als Kunststoffspritzgussteil gestaltet ist. Der Balgfeder 3 ist an ihrer Unterseite, d.h. an einem zu der Seite des Medienspeichers gewandten Einlassbereich, ein Platten- oder Scheibenventil 5 zugeordnet, das ebenfalls ein Kunststoffspritzgussteil darstellt. Auf einen Auslassbereich der Balgfeder 3, der an einem den Einlassbereich gegenüberliegenden Stirnendabschnitt der Balgfeder 3 vorgesehen ist, ist ein Dosierkopf, vorliegend in Form eines Spraykopfes 2, aufgesteckt, der zu dem an dem Gehäuse 4 hubbeweglich geführt ist.

Das Gehäuse 4 weist eine trichterartige Aufnahme auf, in die die Balgfeder 3 von oben her einsetzbar ist. An einem unteren Endbereich ist an dem Gehäuse 4 ein Anschlussstutzen 6 vorgesehen, in den ein nicht näher bezeichnetes Steigrohr oder ein Steigschlauch einsteckbar ist. Das Steigrohr oder der Steigschlauch ragen in das Innere des Medienspeichers bis zu dessen Boden hinein, um das entsprechende Medium, insbesondere eine Flüssigkeit oder ein Gel, anzusaugen. In einem Übergangsbereich des Gehäuses 4 zwischen dem Anschlussstutzen 6 und dem trichterartigen Aufnahmebereich für die Balgfeder 3 ist eine schulterförmige Abstufung vorgesehen, die einen Ventilsitz für das Plattenventil 5 bildet. Das Plattenventil 5 ist - auf eine Mittellängsachse der Dosierpumpe 1 bezogen - axial beweglich gelagert, wobei die Beweglichkeit nach oben durch einen entsprechenden Ringschulterabschnitt 10 der Balgfeder 3 begrenzt ist. Das Plattenventil 5 bildet ein Einlassventil für eine durch das Innere der Balgfeder 3 gebildete Pumpkammer. Das Plattenventil 5 öffnet, sobald innerhalb der Balgfeder 3 ein Unterdruck relativ zum Druck im Medienspeicher entsteht. Falls der Druck innerhalb der Pumpkammer gleich groß oder größer ist als der Druck im Medienspeicher, dichtet das Plattenventil 5 eine Eintrittsöffnung im Einlassbereich 10 der Pumpkammer, d.h. am unteren Stirnendbereich der Balgfeder 3 oder im Bereich des gehäuseseitigen Ventilsitzes, dicht ab.

Das Gehäuse 4 weist oberhalb des die Verschlusskappe 7 bildenden Abschnittes einen koaxial zur Mittellängsachse ausgerichteten, zylindrischen Führungsabschnitt 9 auf, der innenseitig in seinem oberen Randbereich mit einer ringförmigen Anschlagschulter versehen ist. Die Anschlagschulter dient dazu, die Hubbeweglichkeit der Balgfeder 3 nach oben zu begrenzen. Hierzu weist die Balgfeder 3 eine korrespondierend nach außen gerichtete Ringschulter 11 auf, die die Funktion eines Führungskolbens innerhalb des zylindrischen Führungsabschnittes 9 des Gehäuses 4 übernimmt.

Koaxial zu dem Führungsabschnitt 9 weist das Gehäuse 4 einen weiter außen liegenden, zweiten Hülsenring 8 auf, der im Bereich seines oberen Stirnrandes mit einem nach außen gewandten Rastring 16 versehen ist. Auf diesen Rastring 16 ist ein Außenmantel des becherartig gestalteten Dosierkopfes 2 aufgerastet. Hierzu weist der Mantel des becherförmigen Dosierkopfes 2 an seinem unteren Randbereich auf zwei gegenüberliegenden Seiten jeweils eine Rastnase 17 auf (Fig. 2 und 3). Die Rastnasen des Dosierkopfes 2 entsprechen in Form und Anordnung den Rastnasen 17 des Dosierkopfes 2a gemäß den Fig. 2 und 3.

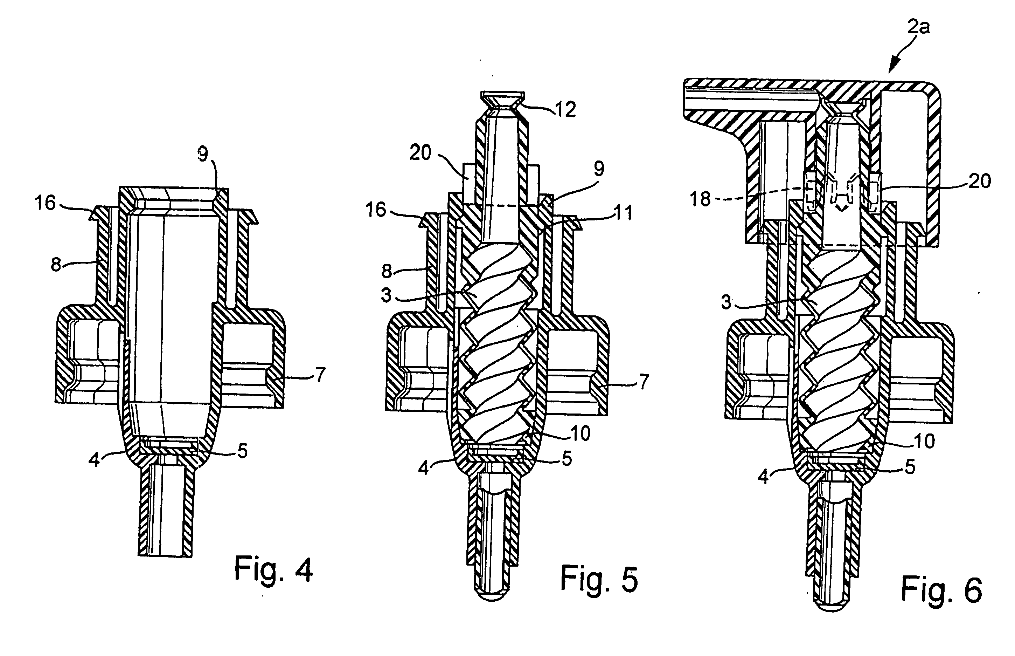

Die Balgfeder 3 ist in ihrem unteren Abschnitt mit dem Einlassbereich 10 versehen, der sich mit seinem konischen Außenumfang kraftschlüssig an einem korrespondierend konischen Innenwandungsabschnitt des Gehäuses 4 abstützt. Die Balgfeder 3 ist aus elastisch nachgiebigem Material hergestellt und in Fig. 6 schematisch in ihrer unbelasteten Lage gezeigt. Die Balgfeder 3 ist in das Gehäuse 4 unter Vorspannung eingesetzt und in ihrem unteren Einlassbereich 10 in dem Gehäuse 4 festgeklemmt. Die Balgfeder 3 weist an den unteren Einlassbereich 10 anschließend einen wendelförmig gestalteten Balgmantel auf, der mit unterschiedlichen Wendelsteigungen versehen ist. Die grundsätzliche Gestaltung eines derartigen Balgmantels ist aus der DE 196 27 228 A1 bereits bekannt, so dass zur näheren Erläuterung auf die zugehörige Offenbarung in der DE 196 27 228 A1 verwiesen wird. An den Balgmantel nach oben einstückig angeformt weist die Balgfeder 3 zum einen den mit der Ringschulter 11 versehenen Führungskolbenabschnitt auf, der die Hubbeweglichkeit innerhalb des zylindrischen Führungsabschnittes 9 des Gehäuses 4 gewährleistet. Weiter nach oben schließt ein zylindrischer Auslassbereich an, der im oberen Stirnbereich mit einem einstückig angeformten Schlauchventilabschnitt 12 versehen ist. Der Führungskolbenbereich und der Austrittsbereich bis knapp unterhalb des Schlauchventilabschnitts 12 sind gegenüber dem Balgmantel dicker gestaltet und somit in radialer Richtung wie auch in axialer Richtung zumindest weitgehend formstabil. In einem Übergangsbereich zwischen dem Führungskolbenbereich und dem Auslassbereich ist die Balgfeder 3 mit einem ringförmigen Absatz versehen, der eine Abstufung von dem Führungskolbenbereich mit größerem Durchmesser zu dem Austrittsbereich mit kleinerem Durchmesser hin darstellt. Die Balgfeder 3 ist aus einem elastischen Kunststoffmaterial hergestellt.

Wie anhand der Fig. 5 erkennbar ist, sind in diesem dickeren Bereich über den Umfang dieses zylindrischen Abschnittes verteilt mehrere Nuten 20 vorgesehen, die nach oben hin offen sind. Diese dienen zur Aufnahme von fingerförmigen Fortsätzen 18 eines Führungsstutzens 21 des Dosierkopfes 2a, wobei der Führungsstutzen 21 auf den zylindrischen Auslassbereich der Balgfeder 3 aufsteckbar ist. Die Nuten 20 bilden zusammen mit den fingerförmigen Fortsätzen 18 eine Fingerverzahnung und somit eine drehschlüssige Verbindung zwischen Dosierkopf 2 und Balgfeder 3. Der Führungsstutzen 21 und damit auch der Dosierkopf 2 sind auf dem Auslassbereich der Balgfeder 3 in gewissen Grenzen axial verschiebbar gehalten. Hierzu ist zwischen dem Führungsstutzen 21 und dem abgestuften Absatz der Balgfeder 3 ein axialer Abstand 19 vorgesehen. Auch die unteren Stirnenden der fingerförmigen Fortsätze 18 enden in Abstand oberhalb des Grundes der Nuten 20.

Die Schnittdarstellung gemäß Fig. 1 stellt eine Vergrößerung im Maßstab 4: 1 dar. Der axiale Abstand 19 beträgt daher nur etwa 0,5mm. Der Dosierkopf 2 ist somit gegenüber der Balgfeder 3 um etwa 0,5mm nach unten absenkbar, ohne dass die Balgfeder 3 selbst nach unten abgesenkt und damit komprimiert wird.

Der Schlauchventilabschnitt 12 der Balgfeder 3 ist mit einer ringförmigen Einschnürung versehen, so dass sich das in Fig. 1 dargestellte Schnittprofil für den Schlauchventilabschnitt 12 ergibt. Der Schlauchventilabschnitt 12 weist einen umlaufenden oberen Stirnrand auf, der an einem konischen Ventilsitzabschnitt 13 an einer Innenseite eines Deckelabschnittes des Dosierkopfes 2 umlaufend dicht anliegt. Der konische Ventilsitzabschnitt 13 ist an seinem radial äußeren und damit gemäß Fig. 1 oberen Ende mit mehreren Entlüftungsrippen 14, gemäß Fig. 2 mit zwei gegenüberliegenden Entlüftungsrippen 14, versehen. Diese Entlüftungsrippen 14 dienen dazu, für ein sogenanntes Priming das Innere der Balgfeder, d.h. die Pumpkammer, zu entlüften. Hierzu wird der Dosierkopf 2 um die zuvor angesprochenen ca. 0,5mm nach unten gedrückt. Dadurch gleitet der obere Ringrand des Schlauchventilabschnittes 12 entlang der schrägen Flächen des konischen Ventilsitzabschnittes 13 nach oben, bis er an den Entlüftungsrippen 14 zur Auflage kommt und sich dadurch verformt. Aufgrund dieser Verformung im Bereich der Entlüftungsrippen liegt der obere Stirnrand des Schlauchventilabschnittes 12 nicht mehr umlaufend dicht an dem konischen Ventilsitzabschnitt 13 an, so dass entsprechende Luft entweichen kann.

Der Dosierkopf weist zudem in grundsätzlich bekannter Weise eine Sprühdüse 15 auf, die die Ausbringung des entsprechenden Mediums vom Inneren der Balgfeder 3 nach außen ermöglicht.

Das Gehäuse 4 weist unterhalb des Verschlusskappenabschnittes 7 einen Entlüftungsschlitz 22 auf, der einen Druckausgleich für das Behälterinnere des Medienspeichers bewirkt. Der Entlüftungsschlitz 22 schafft eine Öffnung zwischen Medienspeicher und dem die Balgfeder 3 umfassenden Innenraum des Gehäuses 4, so dass über den zylindrischen Führungsabschnitt eine Belüftung des Behälterinneren des Medienspeichers ermöglicht ist, wodurch ein Druckausgleich im Medienspeicher bei entsprechenden Ausbringvorgängen eines Mediums vorhanden ist.

## Patentansprüche

1. Dosierpumpe mit einer Balgfeder aus flexiblem, entlang einer Pumpachse axial nachgiebigem Material, deren Hohlraum als Pumpkammer gestaltet ist, **dadurch gekennzeichnet, dass** die Balgfeder (3) an einem Auslassbereich zu einem Dosierkopf (2, 2a) hin als Schlauchventilabschnitt (12) gestaltet ist, der mit einem korrespondierenden Ventilsitzabschnitt (13) eines Dosierkopfes (2, 2a) der Dosierpumpe zusammenwirkt.

2. Dosierpumpe nach Anspruch 1, **dadurch gekennzeichnet, dass** der Schlauchventilabschnitt (12) tellerfederartig mit einer ringförmigen Einschnürung versehen ist.

3. Dosierpumpe nach Anspruch 1, **dadurch gekennzeichnet, dass** die Balgfeder (3) einen in einem Pumpengehäuse (4) hubbeweglich gelagerten Gleitführungsabschnitt (11) aufweist.

4. Dosierpumpe nach Anspruch 1, **dadurch gekennzeichnet, dass** der Dosierkopf (2, 2a) einen den Auslassbereich der Balgfeder (3) außen axial übergreifenden Führungsstutzen (21) aufweist, der axial beweglich auf dem Auslassbereich der Balgfeder (3) aufsitzt.

5. Dosierpumpe nach Anspruch 2, **dadurch gekennzeichnet, dass** die Balgfeder (3) mit einem Einlassbereich (10) in dem Pumpengehäuse (4) kraftschlüssig gehalten ist.

## Claims

1. Dosing pump with a bellows spring made from flexible material axially resilient along a pump axis and whose cavity is designed as a pump chamber, **characterized in that** the bellows spring (3) in an outlet area and towards a dosing head (2, 2a) is designed as a hose valve section (12), which cooperates with a corresponding valve seat section (13) of a dosing head (2, 2a) of the dosing pump.

2. Dosing pump according to claim 1, **characterized in that** in disk springlike manner, the hose valve section (12) is provided with an annular constriction.

3. Dosing pump according to claim 1, **characterized in that** the bellows spring (3) has a sliding guide section (11) mounted in lift-movable manner in a pump casing (4).

4. Dosing pump according to claim 1, **characterized in that** the dosing head (2, 2a) has a guide connector (21) axially overlapping the outside of the outlet area of the bellows spring (3) and which rests in axially mobile manner on the outlet area of said bellows spring (3).

5. Dosing pump according to claim 2, **characterized in that** the bellows spring (3) is frictionally held with an inlet area (10) in the pump casing (4).

## Revendications

1. Pompe de dosage avec un ressort à soufflet en un matériau flexible et axialement souple le long d'un axe de pompage, dont la cavité est réalisée en tant que chambre de pompage, **caractérisée en ce que** le ressort à soufflet (3) auprès d'un domaine d'échappement, en direction d'une tête de dosage (2, 2a) est réalisé en tant que section de valve de gonflage (12), qui agit avec une section de siège de soupape (13) correspondante d'une tête de dosage (2, 2a) de la pompe de dosage.

2. Pompe de dosage d'après la revendication 1, **caractérisée en ce que** la section de valve de gonflage (12) est munie d'une gorge annulaire à la manière d'un ressort à disque.

3. Pompe de dosage d'après la revendication 1, **caractérisée en ce que** le ressort à soufflet (3) présente une section de guidage à glissement (11) logée dans un boîtier de pompe (4) de manière déplaçable en direction de course.

4. Pompe de dosage d'après la revendication 1, **caractérisée en ce que** la tête de dosage (2, 2a) présente une tubulure de guidage (21) qui recouvre axialement de l'extérieur le domaine d'échappement du ressort à soufflet (3) et qui repose de manière axialement mobile sur le domaine d'échappement du ressort à soufflet (3).

5. Pompe de dosage d'après la revendication 2, **caractérisée en ce que** le ressort à soufflet (3) est maintenue à engagement par adhérence dans le boîtier de pompe (4) dans un domaine d'admission (10).
